# EUROPEAN PATENT APPLICATION

(11) **EP 4 622 350 A1**
(43) Date of publication of application: **24.09.2025**
(21) Application number: 23902278.3
(22) Date of filing: 20.10.2023
(51) Int. Cl.: H04W 52/02

(54) **ENERGY-SAVING CONTROL METHOD FOR COMMUNICATION DEVICE, AND ELECTRONIC DEVICE AND READABLE STORAGE MEDIUM**

(30) Priority: 15.12.2022 CN 202211619568
(71) Applicant: ZTE CORPORATION, Shenzhen, Guangdong 518057 (CN)
(72) Inventor: ZHAO, Min, Shenzhen, Guangdong 518057 (CN); YANG, Zhouliang, Shenzhen, Guangdong 518057 (CN); SUN, Yang, Shenzhen, Guangdong 518057 (CN)
(74) Representative: Ziebig Hengelhaupt Intellectual Property Attorneys Patentanwaltskanzlei PartGmbB
(86) International application number: PCT/CN2023/125636
(87) International publication number: WO 2024/125078

(57) **Abstract**

Disclosed in the present application are an energy-saving control method for a communication device, and an electronic device and a readable storage medium. The method comprises: when an energy-saving condition is met, acquiring a target parameter of a communication device, wherein the target parameter comprises at least one of the following: temperatures in time units in a first time period, and the current humidity and the current temperature of the communication device; and when a first condition is met, controlling the communication device to execute a first energy-saving stage in a second time period, wherein the first energy-saving stage comprises: turning off a first fractional component of the communication device, the ratio of the power reduced after the first fractional component is turned off to the total power of the communication device being equal to a first threshold value; and the first condition comprises one of the following: the maximum temperature difference exceeds a preset temperature difference relative threshold, the maximum temperature difference being the difference between the highest temperature and the lowest temperature among the temperatures in the time units; the current humidity is greater than a preset humidity absolute threshold; and the current temperature is less than a preset low-temperature absolute threshold.

## Description

### CROSS-REFERENCE TO RELATED APPLICATIONS

The present disclosure claims priority to Chinese Patent Application No. 202211619568.2, filed on December 15, 2022, entitled "Energy-Saving Control Method for Communication Device, and Electronic Device and Readable Storage Medium", the entire content of which is incorporated herein by reference.

### TECHNICAL FIELD

The present application belongs to the technical field of communication, and particularly relates to an energy-saving control method of a communication device, an electronic device and a readable storage medium.

### BACKGROUND

The 5th Generation Mobile Communication Technology (5G) base station main equipment is composed of a Building Base band Unite (BBU) and a large-scale Active Antenna System (AAU), and its base station power consumption is composed of AAU power consumption and BBU power consumption. Since the 5G base station uses a large wide band, the number of channels is increased and digital intermediate frequency components, chips, etc. are insufficiently integrated, traffic increases, and transmission power increases, resulting in an increase in power consumption.

Therefore, how to achieve maximum energy-saving effect while ensuring device reliability is a technical problem that needs to be solved at present.

### SUMMARY

Embodiments of the present application provide an energy-saving control method for a communication device, and an electronic device and a readable storage medium, which enable maximum energy-saving of the device while ensuring reliability of the device.

In a first aspect, an embodiment of the present application provides an energy-saving control method for a communication device, the method including: when an energy-saving condition is met, acquiring temperatures in time units in a first time period of the communication device; acquiring the current humidity and the current temperature of the communication device; and when a first condition is met, controlling the communication device to execute a first energy-saving stage in a second time period, wherein the first energy-saving stage includes: turning off a first fractional component of the communication device, the ratio of the power reduced after the first fractional component is turned off to the total power of the communication device being equal to a first threshold value; wherein, the first condition includes one of the following: the maximum temperature difference exceeds a preset temperature difference relative threshold, the maximum temperature difference being the difference between the highest temperature and the lowest temperature among the temperatures in the time units; the current humidity is greater than a preset humidity absolute threshold; and the current temperature is less than a preset low-temperature absolute threshold.

In a second aspect, an embodiment of the present application provides an electronic device including a processor, a memory, and a program or instructions stored on the memory and executable on the processor, the program or instructions when executed by the processor implementing the steps of the method according to the first aspect.

In a third aspect, an embodiment of the present application provides a readable storage medium having stored thereon a program or instructions, which when executed by a processor implement the steps of the method according to the first aspect.

In a fourth aspect, an embodiment of the application provides a chip, the chip including a processor and a communications interface coupled to the processor, the processor being configured to run a program or instructions to implement the method according to the first aspect.

### BRIEF DESCRIPTION OF DRAWING(S)

FIG. 1 is a flow schematic diagram of an energy-saving control method for a communication device according to an embodiment of the present application;
FIG. 2a is a structural schematic diagram of an energy-saving system for a communication device according to an embodiment of the present application;
FIG. 2b is a structural schematic diagram of another energy-saving system of a communication device according to an embodiment of the present application;
FIG. 2c is a structural schematic diagram of another energy-saving system of a communication device according to an embodiment of the present application;
FIG. 3 is a structural schematic diagram of a radio-frequency unit according to an embodiment of the present application;
FIG. 4 is a flow schematic diagram of an energy-saving control method applied to a radio-frequency unit according to an embodiment of the present application;
FIG. 5 is a flow schematic diagram of another energy-saving control method applied to a radio-frequency unit according to an embodiment of the present application;
FIG. 6 is a flow schematic diagram of an energy-saving control method applied to a baseband unit according to an embodiment of the present application; and
FIG. 7 is a structural schematic diagram of an electronic device according to an embodiment of the present application.

### DETAILED DESCRIPTION

The technical solutions in the embodiments of the present application will be clearly and completely described below in conjunction with the accompanying drawings in the embodiments of the present application, and it is obvious that the described embodiments are a part of the embodiments of the present application, rather than all of the embodiments. Based on the embodiments in the present application, all other embodiments obtained by those of ordinary skill in the art without making inventive labor, belong to the scope of protection of the present application.

The terms "first", "second" and the like in the description and in the claims of the application, are used for distinguishing between similar objects and not for describing a particular sequential or chronological order. It should be understood that the data so used may be interchanged under appropriate circumstances so that embodiments of the present application can be practiced in sequences other than those illustrated or described herein, and that objects distinguished by "first", "second", etc. are generally of a class and do not limit the number of objects, e.g., the first object may be one or more. In addition, in the specification and claims, "and/or" indicates at least one of the connected objects, and the character "/" generally indicates that the preceding and following related objects are in an "or" relationship.

For the problem of larger power consumption of the 5G base station main equipment, current conventional equipment-level energy-saving approaches are mostly aimed at reducing power consumption at the AAU level. Considering reliability, specific methods include carrier turn-off, channel turn-off, symbol turn-off, and deep sleep. However, it is difficult to achieve maximum energy-saving effects for AAU equipment using these methods. Even when the most effective energy-saving method, deep sleep, is activated, the AAU still consumes hundreds of watts of power.

Additionally, the related technology provides an extreme energy-saving solution, where all components of the communication device, except for the power module, are in a powered-off state. This solution is adopted for energy-saving control of the entire base station. Currently, the technical means employed typically involve using newly installed smart circuit breakers to control the power supply to the BBU and AAU of the base station. Conventional circuit breakers use AC control, whereas the functional modules BBU and AAU in the 5G base station operate on DC power. Implementing this method requires hardware circuit modifications, increasing operational and maintenance costs. Furthermore, the smart circuit breakers themselves also consume power. Moreover, the power control on the BBU and AAU via the smart circuit breakers involves a blanket power-off approach, which is unable to achieve precise control. Suddenly powering off the boards and components on the AAU and BBU can lead to significant temperature differences, which, if too large, can cause solder joints to crack. Rapid temperature drops or high humidity in the entire device can also result in condensation, severely affecting the device's lifespan.

The embodiment of the present application provides a reliable energy-saving control method for a communication device. Without the need to add hardware, it achieves the goal of extreme energy-saving for the communication device while ensuring device reliability through software control.

An energy-saving control method for a communication device provided by an embodiment of the present application is described in detail below by specific embodiments and application scenarios thereof in conjunction with the accompanying drawings.

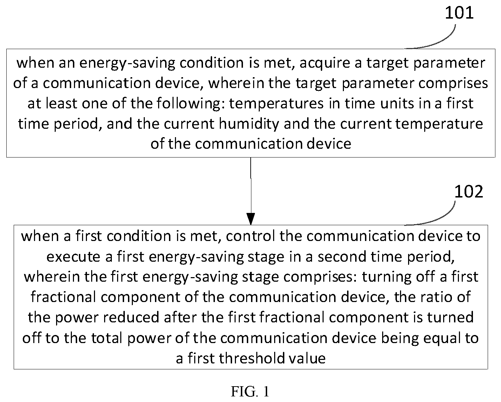

FIG. 1 is a flow schematic diagram of an energy-saving control method for a communication device according to an embodiment of the present application, which may be executed by an electronic device. The electronic device may be located in or out of the communication device. Wherein, the communication device may be a device requiring energy-saving control, e.g. a 5G base station. Referring to FIG. 1, the method may include the steps of:
Step 101: when an energy-saving condition is met, a target parameter of a communication device is acquired, wherein the target parameter includes at least one of the following: temperatures in time units in a first time period, and the current humidity and the current temperature of the communication device.

In the embodiment of the present application, the time unit may be determined according to an actual application, for example, it may be 1 hour, or it may be other time unit, and it may be determined according to a specific energy-saving control requirement.

In addition, in the embodiment of the present application, the temperature in each time unit may be a temperature at a specific time node in one first time period, an average value of temperatures at a plurality of time nodes in one first time period, or an average value of temperatures in a plurality of first time periods. Taking one hour as the time unit and one day as the first time period as an example, the temperature at 9 AM could be the temperature obtained at a specific time point, such as 9:01:01 AM, on the previous day by the communication device. It could also be the average temperature obtained every ten minutes from 9 AM to 10 AM on the previous day by the communication device. Alternatively, it could be the average temperature at 9 AM over the preceding few days (for example, 3 days) by the communication device.

Step 102: when a first condition is met, the communication device is controlled to execute a first energy-saving stage in a second time period, wherein the first energy-saving stage includes: a first fractional component of the communication device is turned off, the ratio of the power reduced after the first fractional component is turned off to the total power of the communication device being equal to a first threshold value; wherein, the first condition includes one of the following: the maximum temperature difference exceeds a preset temperature difference relative threshold, the maximum temperature difference being the difference between the highest temperature and the lowest temperature among the temperatures in the time units; the current humidity is greater than a preset humidity absolute threshold; and the current temperature is less than a preset low-temperature absolute threshold.

In the embodiment of the present application, executing the first energy-saving stage refers to turning off a first fractional component of the communication device, that is, turning off a small number of components of the communication device. For example, this involves executing at least one of carrier turn-off, channel turn-off, or symbol turn-off. Carrier turn-off refers to turning off the Power Amplifier (PA) of the communication device, such as turning off the PA of the base station's radio-frequency unit. Channel turn-off refers to turning off some of the antennas of the communication device (for example, the base station's radio-frequency unit). Symbol turn-off refers to dynamically turning off the power supply of the PA and the switch of the Transceiver (TRX) during moments when there are no scheduled symbols based on the traffic load of the communication device (for example, the base station's traffic load).

In the embodiment of the present application, firstly, when an energy-saving condition is met, a target parameter of a communication device is acquired. When the acquired target parameter meets a first condition, the communication device is controlled to execute a first energy-saving stage in a second time period, wherein the first energy-saving stage includes: turning off a first fractional component of the communication device, the ratio of the power reduced after the first fractional component is turned off to the total power of the communication device being equal to a first threshold value. This achieves the execution of corresponding energy-saving stages based on the equipment's reliability parameter according to the preset first condition. The first condition includes one of the following: the maximum temperature difference exceeds a preset temperature difference relative threshold, the maximum temperature difference being the difference between the highest temperature and the lowest temperature among the temperatures in the time units; the current humidity is greater than a preset humidity absolute threshold; and the current temperature is less than a preset low-temperature absolute threshold, such as -15°C. This ensures that when the maximum temperature difference of the device exceeds the preset temperature difference relative threshold, or the current humidity is greater than the preset humidity absolute threshold, or the current temperature is less than the preset low-temperature absolute threshold, the communication device can execute the first energy-saving stage corresponding to the specific scenario in the second time period, and turn off a first fractional component of the communication device in the energy-saving stage. This approach achieves the maximum energy saving of the device while ensuring its reliability.

In one implementation, the above method may further include: step 201, when the first condition is not met, current power consumption of the communication device is acquired; when a second condition is met, the communication device is controlled to execute the first energy-saving stage in a third time period, the third time period being less than the second time period; wherein, the second condition includes one of the following: a current temperature of the communication device is greater than a preset temperature absolute threshold; and the current power consumption of the communication device is greater than a preset power consumption threshold.

In an embodiment of the present application, when the energy-saving condition is met, the first condition is not met, i.e., the maximum temperature difference does not exceed a preset temperature difference relative threshold, the current humidity is less than a preset humidity absolute threshold, and the current temperature is greater than a preset low-temperature absolute threshold, the current temperature and current power consumption of the communication device are acquired. When the second condition is met, i.e., the current temperature of the communication device is greater than a preset temperature absolute threshold or the current power consumption of the communication device is greater than a preset power consumption threshold, the communication device is controlled to execute the first energy-saving stage in a third time period, so that when the reliability parameter of the communication device meets the second condition, the communication device is controlled to execute the first energy-saving stage in the third time period corresponding to the specific scenario, and the first fractional component is turned off to achieve power saving.

In one implementation, after controlling the communication device to execute the first energy-saving stage in the third time period in the above step 201, the method may further include:
Step 202: a current temperature of the communication device is periodically monitored; and
Step 203: after the monitored current temperature reaches a temperature threshold of the first energy-saving stage, when the third condition is met, the communication device is controlled to execute a second power-saving stage in a fourth time period, wherein the second power-saving stage includes: turning off a second fractional component of the communication device, the ratio of the power reduced after the second fractional component is turned off to the total power of the communication device being equal to a second threshold value, the second threshold being greater than the first threshold; the third condition includes one of the following: the monitored current temperature of the communication device is greater than the preset temperature absolute threshold; and the current power consumption of the communication device is greater than the power consumption threshold.

Wherein, the temperature threshold of the first energy-saving stage includes a temperature relative threshold and/or a low temperature absolute threshold, for example, when the temperature threshold of the first energy-saving stage is a temperature relative threshold, the scenario that the monitored current temperature reaches the temperature threshold of the first energy-saving stage means that the change in temperature of the communication device reaches the temperature threshold of the first energy-saving stage after it is determined that the second condition is met. For example, the temperature threshold of the first energy-saving stage may be a decrease of 10 degrees Celsius, then after determining that the second condition is met, the current temperature of the communication device drops by 10 degrees Celsius, then it is determined whether the above-mentioned third condition is met. For another example, when the temperature threshold of the first energy-saving stage is a low temperature absolute threshold, then the scenario that the monitored current temperature reaches the temperature threshold of the first energy-saving stage means that the current temperature of the communication device drops to the temperature threshold of the first energy-saving stage. For example, the temperature threshold of the first energy-saving stage may be 30 degrees Celsius, then when the current temperature of the communication device drops to 30 degrees Celsius after determining that the second condition is met, whether the above-mentioned third condition is met is determined.

In an embodiment of the present application, when the energy-saving condition is met, the first condition is not met, and the second condition is met, the current temperature of the communication device is periodically monitored. After the monitored current temperature drops to the temperature relative threshold or the low-temperature absolute threshold of the first energy-saving stage, it is once again determined that the third condition is met, that is, when it is monitored that the current temperature of the communication device is greater than the preset absolute temperature threshold and the current power consumption of the communication device is greater than the power consumption threshold, the communication device is controlled to execute the corresponding second energy-saving stage in a fourth time period. This involves turning off a second fractional component of the communication device to achieve energy saving. The power reduced after the second fractional component is turned off in the second energy-saving stage is greater than the power reduced after the first fractional component is turned off.

For example, executing the second energy-saving stage may involve putting the communication device into deep sleep, and turning off most components of the communication device.

In one implementation, after controlling the communication device to execute the second energy-saving stage in the fourth time period in the above step 203, the method may further include:
Step 204: the communication device is controlled to execute a third energy-saving stage in a fifth time period after the current temperature of the communication device reaches the temperature threshold of the second energy-saving stage, wherein the third energy-saving stage includes: turning off all components of the communication device except for a power module.

Wherein, the temperature threshold of the second energy-saving stage includes a temperature relative threshold and/or a low temperature absolute threshold, for example, when the temperature threshold of the second energy-saving stage is a temperature relative threshold, the scenario that the monitored current temperature reaches the temperature threshold of the second energy-saving stage means that the change in temperature of the communication device reaches the temperature threshold of the second energy-saving stage after it is determined that the third condition is met. For example, the temperature threshold of the second energy-saving stage may be a decrease of 10 degrees Celsius, then after determining that the third condition is met, the current temperature of the communication device drops by 10 degrees Celsius, then the communication device is controlled to execute the third energy-saving stage in a fifth time period. For another example, when the temperature threshold of the second energy-saving stage is a low temperature absolute threshold, then the scenario that the monitored current temperature reaches the temperature threshold of the second energy-saving stage means that the current temperature of the communication device drops to the temperature threshold of the second energy-saving stage. For example, the temperature threshold of the second energy-saving stage may be 10 degrees Celsius, then when the current temperature of the communication device drops to 10 degrees Celsius after determining that the third condition is met, the communication device is controlled to execute the third energy-saving stage in a fifth time period.

In the embodiment of the present application, when the energy-saving condition is met, the first condition is not met, the second condition is met, and the third condition is also met, after controlling the communication device to execute the second energy-saving stage in the fourth time period, and when the current temperature of the communication device reaches the temperature relative threshold or the low-temperature absolute threshold of the first energy-saving stage, the communication device is controlled to execute the third energy-saving stage in a fifth time period corresponding to the specific scenario. This involves turning off all components of the communication device except for the power module, so that all components except for the power module are in a powered-off state, achieving extreme energy saving.

In one implementation, the second time period is a sum of the third time period, the fourth time period, and the fifth time period.

In one implementation, the method described above may further include: after the monitored current temperature reaches a temperature threshold of the first energy-saving stage, when the current temperature of the communication device is not greater than the temperature absolute threshold, and the current power consumption of the communication device is not greater than the power consumption threshold, the communication device is controlled to execute a third energy-saving stage in a sixth time period, wherein the third energy-saving stage includes: turning off all components of the communication device except for the power module.

In an embodiment of the present application, after the energy-saving condition is met, the current temperature of the communication device reaches the temperature relative threshold and the low temperature absolute threshold of the first energy-saving stage, it is continued to judge the current temperature and the current power consumption of the communication device. When the current temperature of the communication device is not greater than the temperature absolute threshold and the current power consumption of the communication device is not greater than the power consumption threshold, the communication device is controlled to execute a third energy-saving stage corresponding to this scenario in a sixth time period, namely, all components of the communication device except for the power module are turned off. All the components except for the power module are in a powered-off state to achieve extreme energy saving.

In one implementation, the second time period is a sum of the third time period and the sixth time period.

In one implementation, the method described above may further include: when the current temperature of the communication device is not greater than the temperature absolute threshold and the current power consumption of the communication device is not greater than the power consumption threshold, the communication device is controlled to execute a third energy-saving stage in the second time period, wherein the third energy-saving stage includes: turning off all components of the communication device except for a power module.

In an embodiment of the present application, when the energy-saving condition is met, the current temperature of the communication device is not greater than the temperature absolute threshold and the current power consumption of the communication device is not greater than the power consumption threshold, the communication device is controlled to execute a third energy-saving stage corresponding to the scenario in a second time period, components of the communication device except for a power module are turned off. All the components except for the power module are in a powered-off state to achieve extreme energy saving.

In one implementation, meeting the energy-saving condition includes at least one of the following:
Reaching a preset energy-saving time. For example, the energy-saving time of the communication device may be set in advance, and when the energy-saving time is reached, the energy-saving control is started.

Receiving a power-off operation signaling. For example, a user may send a power-off operation signaling when energy-saving control on a communication device is required, thereby triggering energy-saving control.

In an embodiment of the present application, a preset energy-saving time is set for the communication device, when the communication device running time reaches the preset energy-saving time or when the communication device receives the power-off operation signaling, according to the monitored reliability parameter of the communication device, then the communication device is controlled to execute the corresponding energy-saving stage in a time period corresponding to the scenario after it is determined that the preset condition is met.

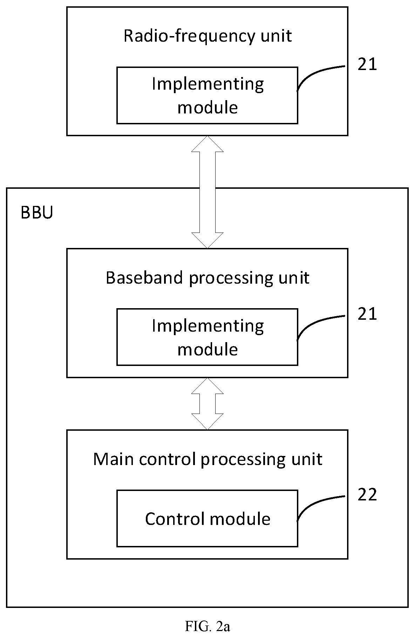

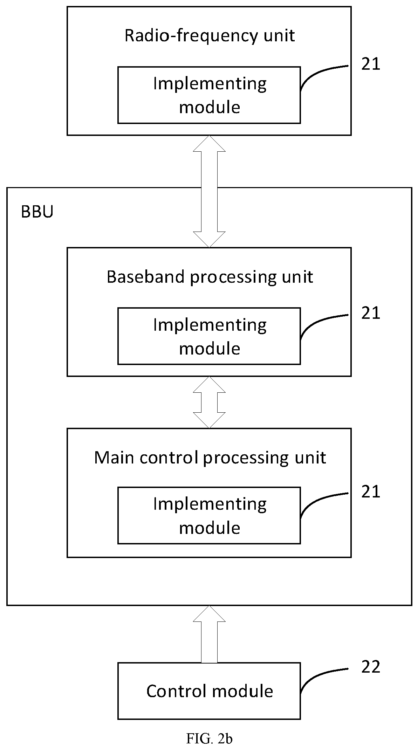

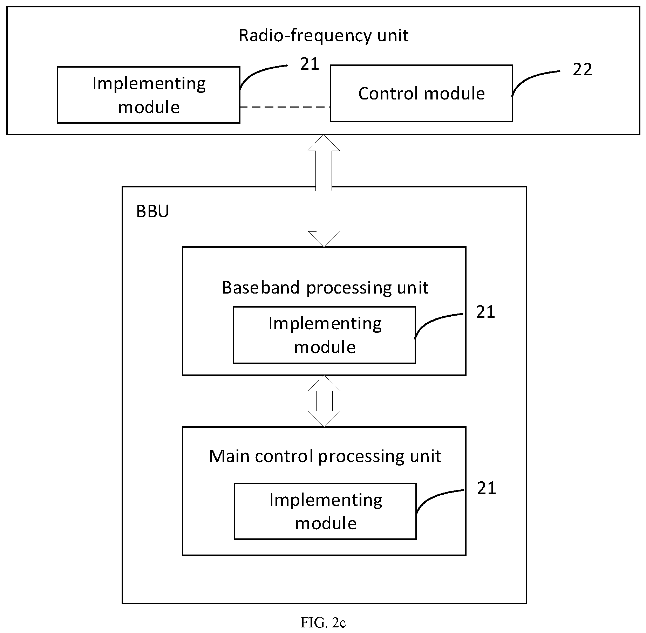

Taking the communication device as a base station as an example, FIGS. 2a, 2b and 2c show several possible deployments of an energy-saving apparatus of the communication device, the apparatus including an implementing module 21 and a control module 22. Wherein the implementing module 21 is configured to, under the control of the control module 22, execute a corresponding energy-saving operation, for example, one of the first energy-saving stage, the second energy-saving stage or the third energy-saving stage described above is executed, whereas the control module 22, according to the temperatures of the communication device in respective time units in the first time period, the current humidity and the current temperature of the communication device, and the energy-saving stage executed by the implementing module 21, sends a corresponding control command to the implementing module 21.

In one deployment, as shown in FIG. 2a, the control module 22 of the apparatus is arranged in a main control processing unit of the BBU, and the implementing module 21 is arranged in the baseband processing unit and the radio-frequency unit.

In another deployment, as shown in FIG. 2b, the control module 22 of the apparatus is arranged outside the BBU, e.g. a third-party independent platform, and the implementing module 21 is arranged in the baseband processing unit and the radio-frequency unit.

In yet another deployment, as shown in FIG. 2c, both the control module 22 and the implementing module 21 of the apparatus are arranged in the radio-frequency unit when energy saving is targeted for the radio-frequency unit.

The energy-saving apparatus of the communication device provided by the embodiment of the present application is capable of implementing the respective processes implemented in the embodiment of the energy-saving control method for a communication device described above.

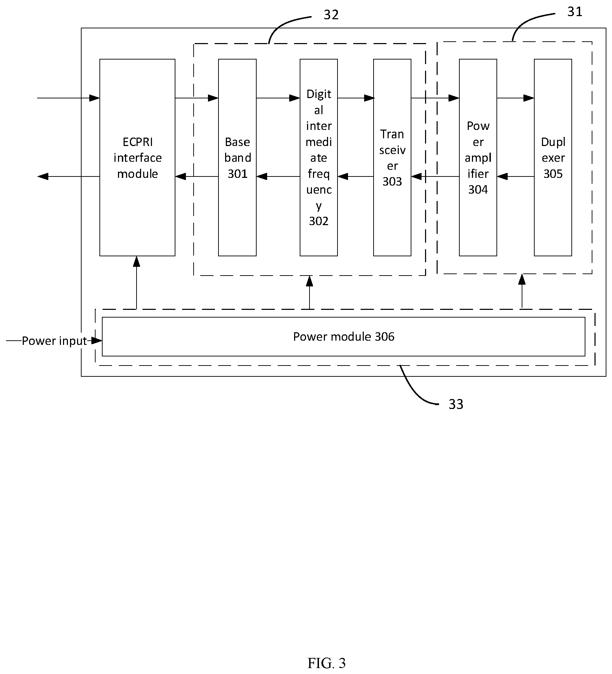

In an embodiment, FIG. 3 provides a structural schematic diagram of a radio-frequency unit, in the radio-frequency unit shown in FIG. 3, the first energy-saving stage 31 involves turning off a power amplifier 304; the second energy-saving stage 32 involves turning off a baseband 301, a digital intermediate frequency 302, and a transceiver 303; and the third energy-saving stage 33 involves turning off the output of the power module 306.

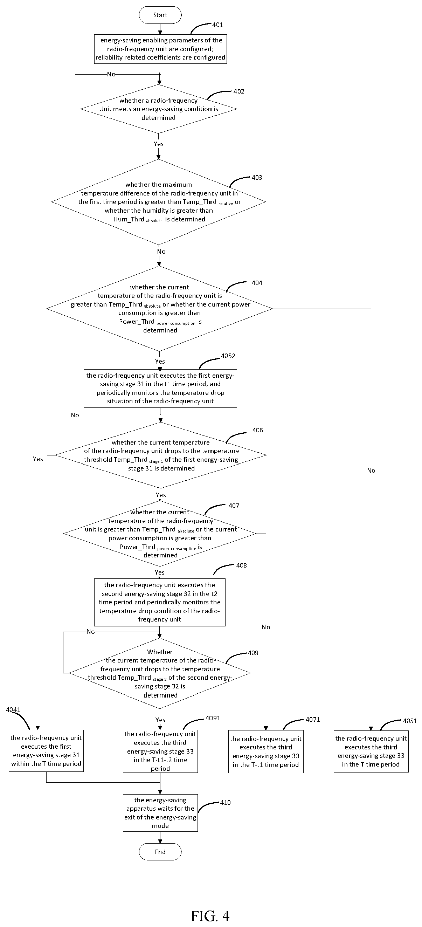

Referring to FIG. 4, an energy-saving control method for a radio-frequency unit may include the following steps:
Step 401: energy-saving enabling parameters of the radio-frequency unit are configured, including but not limited to an energy-saving function switch, an effective time, etc.; reliability related coefficients are configured, such as a temperature difference relative threshold Temp_Thrdᵣₑₗₐₜᵢᵥₑ, a low temperature absolute threshold Temp_Low_Thrd _{absolute}, a humidity absolute threshold Hum_Thrd _{absolute}, a temperature absolute threshold Temp_Thrd _{absolute}, a power consumption **threshold** Power_Thrd _{power consumption}, etc.;
Step 402: whether a radio-frequency unit meets an energy-saving condition is determined; if no, the process is returned to the current step 402, if yes, for example, the energy-saving time is reached, the cells on the radio-frequency unit are all in a low load state, etc., then step 403 is executed;
Step 403: the temperature of the radio-frequency unit in the first time period and the humidity of the current radio-frequency unit are acquired, and whether the maximum temperature difference of the radio-frequency unit in the first time period is greater than Temp_Thrd ᵣₑₗₐₜᵢᵥₑ or whether the humidity is greater than Hum_Thrd _{absolute} is determined; if yes, step 4041 is executed; if no, step 404 is executed.
Step 4041: the radio-frequency unit executes the first energy-saving stage 31 within the T time period;
Step 404: the current temperature and current power consumption of the radio-frequency unit are acquired, whether the current temperature of the radio-frequency unit is greater than Temp_Thrd _{absolute} or whether the current power consumption is greater than Power_Thrd _{power consumption} is determined; if no, step 4051 is executed, if yes, step 4052 is executed;
Step 4051: the radio-frequency unit executes the third energy-saving stage 33 in the T time period;
Step 4052: the radio-frequency unit executes the first energy-saving stage 31 in the t1 time period, and periodically monitors the temperature drop situation of the radio-frequency unit; and
Step 406: whether the current temperature of the radio-frequency unit drops to the temperature threshold Temp_Thrd _{stage 1} of the first energy-saving stage 31 is determined, the Temp_Thrd _{stage 1} includes a temperature difference relative threshold Temp_Thrd _{relative 1} and/or a low temperature absolute threshold Temp_Thrd _{absolute 1}. In a particular application, it may be determined whether the current temperature of the radio-frequency unit has dropped to Temp_Thrd _{relative 1}, or whether the current temperature of the radio-frequency unit has dropped to Temp_Thrd _{absolute 1}, and when either of the thresholds of Temp_Thrd _{absolute 1} and Temp_Thrd_{relative 1} is reached, the determination result is yes. If the determination result is no, the process is returned to the current step 406; if the determination result is yes, step 407 is executed.
Step 407: whether the current temperature of the radio-frequency unit is greater than Temp_Thrd _{absolute} or the current power consumption is greater than Power_Thrd _{power consumption} is determined; if no, step 4071 is executed, if yes, step 408 is executed;
Step 4071: the radio-frequency unit executes the third energy-saving stage 33 in the T-t1 time period;
Step 408: the radio-frequency unit executes the second energy-saving stage 32 in the t2 time period and periodically monitors the temperature drop condition of the radio-frequency unit;
Step 409: whether the current temperature of the radio-frequency unit drops to the temperature threshold Temp_Thrd _{stage 2} of the second energy-saving stage 32 is determined, the Temp_Thrd _{stage 2} includes a temperature difference relative threshold Temp_Thrd _{relative 2} and/or a low temperature absolute threshold Temp_Thrd _{absolute 2}. In a particular application, it is determined whether the current temperature of the radio-frequency unit has dropped to Temp_Thrd _{relative 2} or whether the current temperature of the radio-frequency unit has dropped to Temp_Thrd _{absolute 2}, and when either of the thresholds Temp_Thrd _{absolute 2} and Temp_Thrd _{relative 2} is reached, the determination result is yes. If the determination result is no, the process is returned to the current step 409, if the determination result is yes, step 4091 is executed;
Step 4091: the radio-frequency unit executes the third energy-saving stage 33 in the T-t1-t2 time period; and
Step 410: the energy-saving apparatus waits for the exit of the energy-saving mode.

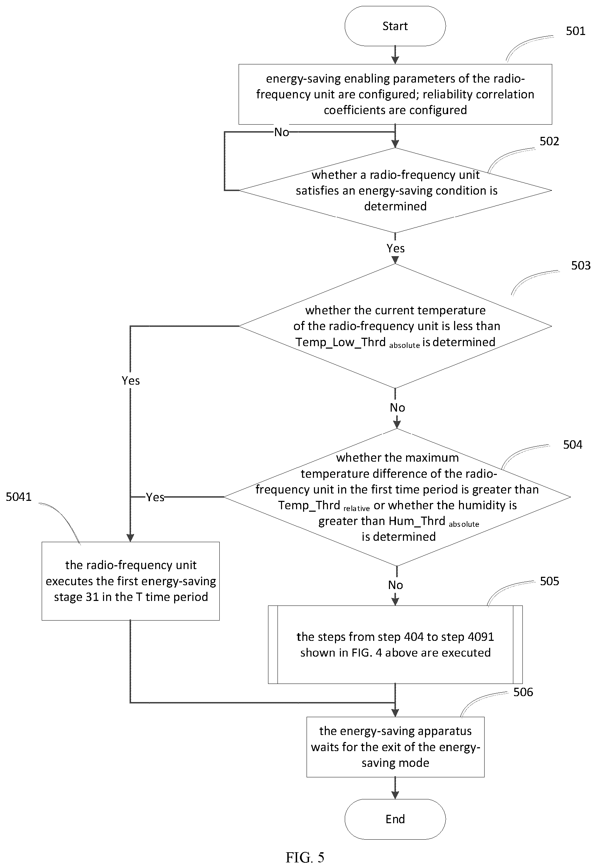

In an embodiment, applied to the radio-frequency unit as shown in FIG. 5, the method may further include the steps of:
Step 501: energy-saving enabling parameters of the radio-frequency unit are configured; reliability correlation coefficients are configured;
Step 502: whether a radio-frequency unit satisfies an energy-saving condition is determined; if no, the process is returned to current step 502; if yes, step 503 is executed;
Step 503: the current temperature of the radio-frequency unit is acquired, whether the current temperature of the radio-frequency unit is less than Temp_Low_Thrd _{absolute} is determined; if yes, step 5041 is executed; if no, step 504 is executed;
Step 5041: the radio-frequency unit executes the first energy-saving stage 31 in the T time period;
Step 504: the temperature of the radio-frequency unit in the first time period and the humidity of the current radio-frequency unit are acquired, and whether the maximum temperature difference of the radio-frequency unit in the first time period is greater than Temp_Thrd ᵣₑₗₐₜᵢᵥₑ or whether the humidity is greater than Hum_Thrd _{absolute} is determined; if yes, step 5041 is executed; if no, step 504 is executed;
Step 505: the steps from step 404 to step 4091 shown in FIG. 4 above are executed;
Step 506: the energy-saving apparatus waits for the exit of the energy-saving mode.

In an embodiment, the method is applied to a baseband unit, wherein the first energy-saving stage 61 includes turning off the baseband chip 1: Central Processing Unit (CPU) or Modulation and Coding Scheme (MCS); the second energy-saving stage 62 includes turning off the baseband chip 2: Field Programmable Gate Array (FPGA); the third energy-saving stage 63 includes turning off the output of the power module.

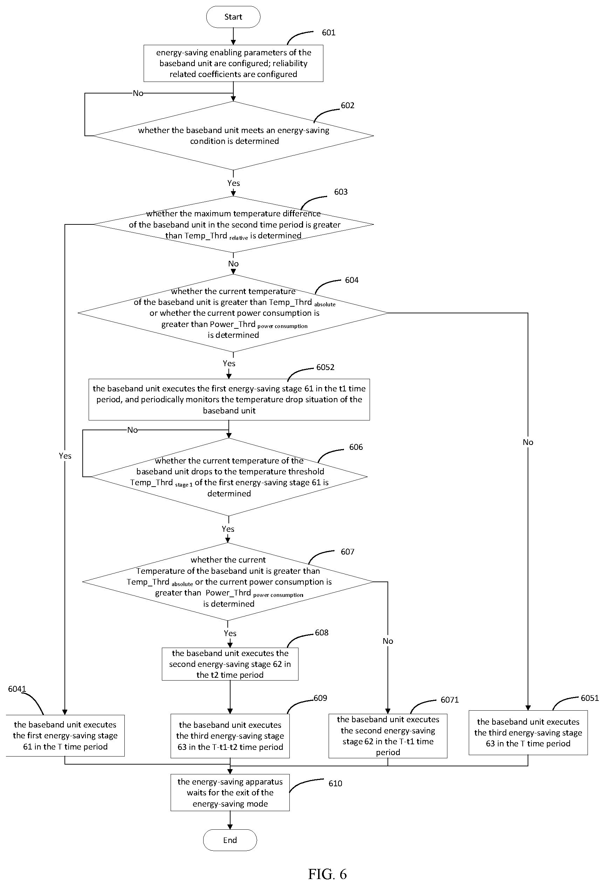

Referring to FIG. 6, a method for energy-saving control of a baseband unit may include the following steps:
Step 601: energy-saving enabling parameters of the baseband unit are configured, including but not limited to an energy-saving function switch, an effective time, etc.; reliability related coefficients are configured, such as a temperature difference relative threshold Temp_Thrd ᵣₑₗₐₜᵢᵥₑ, a low temperature absolute threshold, a humidity absolute threshold Hum_Thrd _{absolute}, a temperature absolute threshold Temp_Thrd _{absolute}, a power consumption threshold Power_Thrd _{power consumption}, etc.;
Step 602: whether the baseband unit meets an energy-saving condition is determined; if no, the process is returned to the current step 602; if yes, step 603 is executed;
Step 603: the temperature of the baseband unit in the second time period is acquired, and whether the maximum temperature difference of the baseband unit in the first time period is greater than Temp_Thrd ᵣₑₗₐₜᵢᵥₑ is determined; if yes, step 6041 is executed; if no, step 604 is executed;
Step 6041: the baseband unit executes the first energy-saving stage 61 in the T time period;
Step 604: the current temperature and the current power consumption of the baseband unit are acquired, whether the current temperature of the baseband unit is greater than Temp_Thrd _{absolute} or whether the current power consumption is greater than Power_Thrd _{power consumption} is determined; if no, step 6051 is executed; if yes, step 6052 is executed;
Step 6051: the baseband unit executes the third energy-saving stage 63 in the T time period;
Step 6052: the baseband unit executes the first energy-saving stage 61 in the t1 time period, and periodically monitors the temperature drop situation of the baseband unit; and
Step 606: whether the current temperature of the baseband unit drops to the temperature threshold Temp_Thrd _{stage 1} of the first energy-saving stage 61 is determined, the Temp_Thrd _{stage 1} includes a temperature difference relative threshold Temp_Thrd ᵣₑₗₐₜᵢᵥₑ and a low temperature absolute threshold; if no, the process is returned to the current step 606; if yes, step 607 is executed.
Step 607: whether the current temperature of the baseband unit is greater than Temp_Thrd _{absolute} or the current power consumption is greater than Power_Thrd _{power consumption} is determined; if no, step 6071 is executed, if yes, step 608 is executed;
Step 6071: the baseband unit executes the second energy-saving stage 62 in the T-t1 time period;
Step 608: the baseband unit executes the second energy-saving stage 62 in the t2 time period;
Step 609: the baseband unit executes the third energy-saving stage 63 in the T-t1-t2 time period; and
Step 610: the energy-saving apparatus waits for the exit of the energy-saving mode.

It should be noted that although the above embodiment uses two reliability factors of temperature and power consumption to control the step energy-saving stage into three stages, it is not limited thereto, and in practical applications, the energy-saving process may be divided into a plurality of stages according to other reliability factors such as humidity. In addition, although the present application is described with three energy-saving stages, it is not limited thereto, and it is also possible to reduce or expand, for example, into two energy-saving stages, or into four or more energy-saving stages.

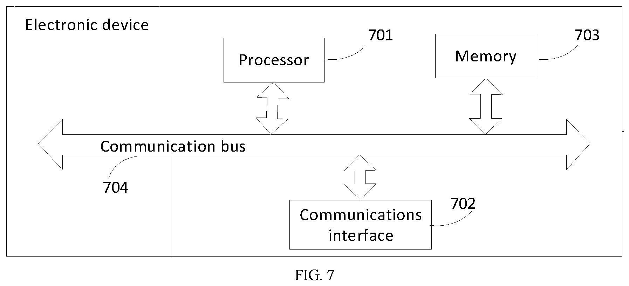

Based on the same technical idea, an embodiment of the present application further provides an electronic device, the electronic device is configured to execute the above-mentioned energy-saving control method for a communication device, and FIG. 7 is a structural schematic diagram of an electronic device implementing various embodiments of the present application. The electronic device may vary greatly in configuration or performance, and may include a processor 701, a communications interface 702, a memory 703, and a communication bus 704, wherein the processor 701, the communications interface 702, and the memory 703 communicate with each other through the communication bus 704. The processor 701 may invoke a computer program stored on the memory 703 and executable on the processor 701 to execute the following steps:
the target parameter of a communication device when an energy-saving condition is met is acquired, wherein the target parameter includes: temperatures in respective time units in a first time period, a current humidity of the communication device, and a current temperature of the communication device; the communication device is controlled to execute a first energy-saving stage in a second time period if a first condition is met, wherein the first energy-saving stage includes: turning off a first fractional component of the communication device, the ratio of the power reduced after the first fractional component is turned off to the total power of the communication device being equal to a first threshold value; wherein the first condition includes one of the following: the maximum temperature difference exceeds a preset temperature difference relative threshold, the maximum temperature difference being the difference between the highest temperature and the lowest temperature among the temperatures in the time units; the current humidity is greater than a preset humidity absolute threshold; and the current temperature is less than a preset low-temperature absolute threshold.

The specific execution steps can refer to the respective steps of the embodiment of the energy-saving control method for the communication device described above, and can achieve the same technical effects, which will not be repeated here to avoid repetition.

The above electronic device structure does not constitute a limitation of the electronic device, and the electronic device may include more or fewer components than illustrated, or a combination of certain components, or a different arrangement of components, for example, an input unit may include a Graphics Processing Unit (GPU) and a microphone, a display unit may configure a display panel in the form of a liquid crystal display, an organic light emitting diode, or the like. The user input unit includes at least one of a touch panel and other input devices. Touch panels are also referred to as touch screens. Other input devices may include, but are not limited to, a physical keyboard, function keys (such as volume control keys, on-off keys, etc.), a trackball, a mouse, a joystick, and are not further described herein.

The memory may be used to store software programs as well as various data. The memory may mainly include a first storage area storing programs or instructions and a second storage area storing data, wherein the first storage area may store an operating system, application programs or instructions required for at least one function (such as a sound playing function, an image playing function, etc.), and the like. Further, the memory may include a volatile memory or a nonvolatile memory, or the memory may include both the volatile and nonvolatile memories. Wherein, the non-volatile memory may be a Read-Only Memory (ROM), a Programmable ROM (PROM), an Erasable PROM (EPROM), an Electrically EPROM (EEPROM) or a flash memory. The volatile memory may be a Random Access Memory (RAM), a Static RAM (SRAM), a Dynamic RAM (DRAM), a Synchronous DRAM (SDRAM), a Double Data Rate SDRAM (DDRSDRAM), an Enhanced SDRAM (ESDRAM), a Synch link DRAM (SLDRAM), and a Direct Rambus RAM (DRRAM).

The processor may include one or more processing units; optionally, the processor integrates an application processor and a modem processor, wherein the application processor primarily processes operations related to an operating system, a user interface, and application programs, and the modem processor primarily processes wireless communication signals, such as a baseband processor. It will be appreciated that the modem processor described above may also not be integrated into the processor.

The embodiments of the present application also provide a readable storage medium having stored thereon programs or instructions, which when executed by a processor implement the respective processes of the above embodiments of the energy-saving control method for the communication device, and can achieve the same technical effects, which will not be repeated here to avoid repletion.

Wherein, the processor is the processor in the electronic device described in the above embodiment. The readable storage medium includes a computer readable storage medium such as a computer Read-Only Memory (ROM), a Random Access Memory (RAM), a magnetic or optical disk.

An embodiment of the present application further provides a chip, the chip includes a processor and a communications interface, the communications interface is coupled with the processor, and the processor is configured to run programs or instructions to implement the respective processes of the above embodiments of the energy-saving control method for the communication device, and can achieve the same technical effects, which will not be repeated here to avoid repetition.

It should be understood that the chip referred to by embodiments of the present application may also be referred to as a System on Chip, a system chip, a chip system, or the like.

It should be noted that, herein, the terms "includes", "including," or any other variation thereof, are intended to cover a non-exclusive inclusion, such that a process, method, article, or apparatus that includes a list of elements does not include only those elements but may include other elements not expressly listed or inherent to such process, method, article, or apparatus. Without further limitation, an element defined by the statement "including a" does not preclude the presence of additional identical elements in a process, method, article, or apparatus that includes the element. In addition, it should be noted that the scope of the method and apparatus in the embodiments of the present application is not limited to performing the functions in the order shown or discussed, and may also include performing the functions in a substantially simultaneous manner or in the reverse order according to the functions involved, for example, the described method may be performed in an order different from that described, and various steps may be added, omitted, or combined. In addition, features described with reference to certain examples may be combined in other examples.

From the above description of the embodiments, it will be clear to those skilled in the art that the methods of the embodiments described above can be implemented by means of software plus a necessary general hardware platform, and of course can also be implemented by means of hardware, but in many cases the former is the better embodiment. Based on such understanding, the technical solution of the present application, in essence, or the part contributing to the prior art, can be embodied in the form of a software product, the computer software product is stored in a storage medium (e.g., ROM/RAM, magnetic disk, optical disk) and includes instructions for causing a terminal (e.g., a mobile phone, a computer, a server, an air conditioner, or a network appliance) to execute the methods according to various embodiments of the present disclosure.

Embodiments of the present application are described above with reference to the accompanying drawings, however, the present application is not limited to the specific embodiments described above. The particular embodiments described above are intended to be illustrative only and not restrictive. Under the inspiration of this application, those skilled in the art can make many forms without departing from the purpose of this application and the scope of protection of the claims, all of which fall within the protection of this application.

## Claims

1. An energy-saving control method for a communication device, comprising:
acquiring a target parameter of a communication device, when an energy-saving condition is met, wherein the target parameter comprises at least one of the following: temperatures in time units in a first time period, and the current humidity and the current temperature of the communication device; and
controlling the communication device to execute a first energy-saving stage in a second time period, when a first condition is met, wherein the first energy-saving stage comprises: turning off a first fractional component of the communication device, the ratio of the power reduced after the first fractional component is turned off to the total power of the communication device being equal to a first threshold value;
wherein, the first condition comprises one of the following:
the maximum temperature difference exceeds a preset temperature difference relative threshold, the maximum temperature difference being the difference between the highest temperature and the lowest temperature among the temperatures in the time units;
the current humidity is greater than a preset humidity absolute threshold; and
the current temperature is less than a preset low-temperature absolute threshold.

2. The method according to claim 1, wherein the method further comprises:
acquiring current power consumption of the communication device, when the first condition is not met;
controlling the communication device to execute the first energy-saving stage in a third time period, when a second condition is met, the third time period being less than the second time period;
wherein, the second condition comprises one of the following:
a current temperature of the communication device is greater than a preset temperature absolute threshold; and
the current power consumption of the communication device is greater than a preset power consumption threshold.

3. The method according to claim 2, wherein after controlling the communication device to execute the first energy-saving stage in the third time period, the method further comprises:
monitoring a current temperature of the communication device periodically; and
controlling the communication device to execute a second energy-saving stage in a fourth time period, after the monitored current temperature reaches a temperature threshold of the first energy-saving stage, when the third condition is met, wherein the second energy-saving stage comprises: turning off a second fractional component of the communication device, the ratio of the power reduced after the second fractional component is turned off to the total power of the communication device being equal to a second threshold value, the second threshold being greater than the first threshold;
the third condition comprises one of the following:
the monitored current temperature of the communication device is greater than the preset temperature absolute threshold; and
the current power consumption of the communication device is greater than the power consumption threshold.

4. The method according to claim 3, wherein after controlling the communication device to execute the second energy-saving stage in the fourth time period, the method further comprises:
controlling the communication device to execute a third energy-saving stage in a fifth time period after the current temperature of the communication device reaches the temperature threshold of the second energy-saving stage, wherein the third energy-saving stage comprises: turning off all components of the communication device except for a power module.

5. The method according to claim 2, wherein after controlling the communication device to execute the first energy-saving stage in the third time period, the method further comprises:
monitoring a current temperature of the communication device periodically; and
controlling the communication device to execute a third energy-saving stage in a six time period, after the monitored current temperature reaches a temperature threshold of the first energy-saving stage, when the third condition is not met;
wherein, the third energy-saving stage comprises: turning off all components of the communication device except for a power module;
the third condition comprises one of the following:
the monitored current temperature of the communication device is greater than the preset temperature absolute threshold; and
the current power consumption of the communication device is greater than the power consumption threshold.

6. The method according to claim 1, wherein the method further comprises:
acquiring current power consumption of the communication device, when the first condition is not met;
controlling the communication device, when a second condition is not met, to execute a third energy-saving stage in the second time period;
wherein, the third energy-saving stage comprises: turning off all components of the communication device except for a power module;
the second condition comprises one of the following:
a current temperature of the communication device is greater than a preset temperature absolute threshold; and
the current power consumption of the communication device is greater than a preset power consumption threshold.

7. An electronic device, wherein the electronic device comprises a processor and a memory, the memory storing a program or instructions executable on the processor, the program or instructions when executed by the processor implementing the steps of energy-saving of the communication device according to any one of claims 1 to 6.

8. A readable storage medium having stored thereon a program or instructions which, when executed by a processor, implement the steps of energy-saving of the communication device according to any one of claims 1 to 6.
